# EUROPÄISCHE PATENTSCHRIFT

(11) **EP 4 168 282 B1**
(45) Veröffentlichungstag und Bekanntmachung des Hinweises auf die Patenterteilung: **24.04.2024**
(21) Anmeldenummer: 21715128.1
(22) Anmeldetag: 25.02.2021
(51) Int. Cl.: B60T 8/36, B60T 11/236

(54) **HYDRAULIKAGGREGAT, INSBESONDERE ZUR STEUERUNG UND REGELUNG EINES BREMSDRUCKS IN EINEM BREMSKREIS EINER ELEKTRONISCH SCHLUPFREGELBAREN BREMSANLAGE EINES KRAFTFAHRZEUGS UND VERFAHREN ZUR MONTAGE EINES HYDRAULIKAGGREGATS**
HYDRAULIC UNIT, MORE PARTICULARLY FOR THE OPEN-LOOP AND CLOSED-LOOP CONTROL OF BRAKE PRESSURE IN A BRAKE CIRCUIT OF AN ELECTRONICALLY SLIP-CONTROLLABLE BRAKING SYSTEM OF A MOTOR VEHICLE AND METHOD FOR ASSEMBLING A HYDRAULIC UNIT
UNITÉ HYDRAULIQUE, PLUS PARTICULIÈREMENT POUR LA COMMANDE EN BOUCLE OUVERTE ET EN BOUCLE FERMÉE DE LA PRESSION DE FREINAGE DANS UN CIRCUIT DE FREINAGE D'UN SYSTÈME DE FREINAGE À RÉGULATION ANTIPATINAGE ÉLECTRONIQUE D'UN VÉHICULE À MOTEUR ET PROCÉDÉ PERMETTANT D'ASSEMBLER UNE UNITÉ HYDRAULIQUE

(30) Priorität: 17.06.2020 DE 102020207505
(43) Veröffentlichungstag der Anmeldung: 26.04.2023
(73) Patentinhaber: Robert Bosch Gesellschaft mit Beschränkter Haftung, 70469 Stuttgart (DE)
(72) Erfinder: SUAREZ-SEMINARIO, Dariusz, 77855 Achern (DE); ZANDER, Thomas, 87534 Oberstaufen (DE); KECK, Jennifer, 87474 Buchenberg (DE); KIMPEL, Thomas, 72116 Moessingen (DE); POCHERT, Peter, 72127 Kusterdingen-Jettenburg (DE); JOAS, Ingmar, 91555 Feuchtwangen (DE); LOEFFLER, Michael, 87534 Oberstaufen (DE); NIGGEBRUEGGE, Bert, 72770 Reutlingen (DE); HEYNE, Benjamin, 76137 Karlsruhe (DE); STEPHAN, Thilo, 74080 Heilbronn (DE); SCHLITZKUS, Michael, 87463 Dietmannsried (DE)
(86) Internationale Anmeldenummer: PCT/DE2021/100190
(87) Internationale Veröffentlichungsnummer: WO 2021/254552

(56) Entgegenhaltungen:
- DE-A1-102017 218 648
- GB-A- 2 266 752
- US-A1- 2004 144 248
- US-A1- 2014 203 625

## Beschreibung

### Technischer Hintergrund

Die Erfindung betrifft ein Hydraulikaggregat, insbesondere zur Steuerung und Regelung eines Bremsdrucks in einem Bremskreis einer elektronisch schlupfregelbaren Bremsanlage eines Kraftfahrzeugs nach den Merkmalen des Oberbegriffs des Anspruchs 1 und weiterhin ein Verfahren zur Montage eines Hydraulikaggregats nach den Merkmalen des Oberbegriffs des Anspruchs 14.

Elektronisch schlupfregelbare Bremsanlagen in Kraftfahrzeugen sind hinlänglich bekannt. Sie tragen erwiesenermaßen zur Erhöhung der Sicherheit im Straßenverkehr bei und sind deshalb inzwischen in vielen Ländern gesetzlich vorgeschrieben.

Mit elektronisch schlupfregelbaren Bremsanlagen sind die Bremsdrücke in den Radbremsen eines Fahrzeugs elektronisch derart regelbar, dass ein an den zugeordneten Rädern des Fahrzeugs auftretender Radschlupf nur für einen kurzen Zeitraum auftritt. Auf diese Weise bleibt das Fahrzeug während Bremsvorgängen lenkbar, gerät in keinen instabilen Fahrzustand und lässt sich dennoch auf kurzem Bremsweg abbremsen. Elektronisch schlupfregelbare Fahrzeugbremsanlagen sind zudem dazu imstande Bremsvorgänge in Abhängigkeit einer unfallträchtigen Verkehrssituation oder eines kritischen Fahrzustands selbstständig, d.h. ohne Fahrerbeteiligung einzuleiten und zu regeln. Weiterhin kommt elektronisch schlupfregelbaren Bremsanlagen bei der technischen Umsetzung eines pilotierten bzw. automatisierten Fahrbetriebs Bedeutung zu.

### Stand der Technik

Die erwähnte Bremsdruckregelung innerhalb einer elektronisch schlupfregelbaren Bremsanlage erfolgt durch ein sogenanntes Hydraulikaggregat, wie es beispielsweise aus der DE 10 2017 218 648 A1 bereits bekannt ist.

Dieses bekannte Hydraulikaggregat umfasst ein Pumpengehäuse, das u.a. mit einem antreibbaren Bremsdruckerzeuger bestückt ist. Letzterer wird von einem Motor über eine rotierend angetriebene Motorwelle betätigt. Die elektrische Ansteuerung des Motors wird in diesem Zusammenhang bedarfsgerecht von einem elektronischen Steuergerät vorgenommen.

Bei dem bekannten Hydraulikaggregat sind der Motor sowie das elektronische Steuergerät auf einander gegenüberliegenden Seiten des Pumpengehäuses angeordnet. Die Motorwelle ist drehbar im Inneren einer Wellenbohrung gelagert, welche das Pumpengehäuse von der Seite, an welcher der Motor angeordnet ist, bis zu der dazu gegenüberliegenden Seite, an welcher das elektronische Steuergerät angeordnet ist, durchdringt. Mit einer Sensoreinrichtung aus einem mit der Motorwelle umlaufenden Signalgeber und einem im elektronischen Steuergerät ortsfest aufgenommenen Signalempfänger wird der Drehwinkel der Motorwelle erfasst. Über eine Dichtungsvorrichtung ist die Wellenbohrung gegenüber dem Inneren des elektronischen Steuergeräts abgedichtet, so dass eine potenzielle Druckmittelleckage im Pumpengehäuse über die Wellenbohrung nicht in das Innere des elektronischen Steuergeräts vordringen und dort Störungen verursachen kann.

Die vorliegende Erfindung unterscheidet sich von diesem Stand der Technik u.a. durch die Verwendung einer Einlegedichtung zur Abdichtung der Wellenbohrung zum elektronischen Steuergerät. Diese Einlegedichtung ist in einer am Pumpengehäuse ausgebildeten Dichtungsaufnahme angeordnet und wird von einer Vorspanneinrichtung mit einer Vorspannkraft beaufschlagt, wenn das elektronische Steuergerät am Pumpengehäuse befestigt ist.

Weiterhin bekannt ist aus der US 2004/144 248 A1 ein Verfahren zur Montage eines Hydraulikaggregats, bei dem eine Dichtungsvorrichtung von einem Abstützelement, gegen axiales Verschieben gesichert, in einer Dichtungsaufnahme angeordnet ist.

### Vorteile der Erfindung

Einlegedichtungen sind in vielfältiger Ausführung kostengünstig am Markt verfügbar, sind im Fertigungsprozess einfach handhabbar und die Fertigungsqualität ist montagebegleitend problemlos zu prüfen, beispielsweise optisch, anhand von Kameras oder mechanisch, durch Messtaster. Zudem ist mit einer Einlegedichtung ein montagebedingter Versatz des elektronischen Steuergeräts relativ zum Pumpengehäuse leicht auszugleichen. Eine mechanisch vorgespannte Einlegdichtung nimmt thermisch bedingte Ausdehnungstoleranzen sowie Maßtoleranzen zwischen dem Gehäuse des elektronischen Steuergeräts, das üblicherweise aus Kunststoff hergestellt ist und dem Pumpengehäuse, welches üblicherweise aus einer Aluminiumlegierung besteht, auf.

Weiterhin sind die Dichtungseigenschaften einer Einlegdichtung unter bekannten Einbaubedingungen vorherbestimmbar und lassen sich somit an einen jeweiligen Anwendungsfall bedarfsgerecht anpassen. Beispielsweise sind durch eine konstruktive Abstimmung von Material, Gestalt und Abmessungen der Einlegedichtung, der Vorspanneinrichtung und der Dichtungsaufnahme Axial- und Radialkräfte festlegbar mit welchen die Einlegedichtung im vorgespannten Zustand gegen die Begrenzungen der zugeordneten Dichtungsaufnahme gedrückt wird.

Insbesondere gegenüber Flüssigdichtungen haben Einlegedichtungen den Vorteil, dass aufwändige Dosiereinrichtungen sowie Prozesszeit zur Aushärtung einer eingebrachten Dichtungsmasse eingespart und dass die gegeneinander abgedichteten Baugruppen einfacher voneinander gelöst und ggf. gegenseitig ausgetauscht werden können.

Weitere Vorteile oder vorteilhafte Weiterbildungen der Erfindung ergeben sich aus den Unteransprüchen oder aus der nachfolgenden Beschreibung.

In einer vorteilhaften Weiterbildung der Erfindung ist die Einlegedichtung von der mechanischen Vorspanneinrichtung mit einer in Richtung einer Längsachse der Motorwelle gerichteten Axialkraft beaufschlagt. Diese Axialkraft gewährleistet eine zuverlässige Dichtungswirkung der Einlegedichtung unter wechselnden Umgebungsbedingungen.

Weiterhin vorteilhaft ist es, wenn ein Gerätegehäuse des elektronischen Steuergeräts einen dem Pumpengehäuse zugewandten Zwischenboden umfasst, von dem die Vorspanneinrichtung in Richtung einer Längsachse der Motorwelle absteht. Durch einen Zwischenboden lässt sich der Innenraum eines elektronischen Steuergeräts in einen dem Pumpengehäuse zugewandten Einbauraum für Spulenbaugruppen von Magnetventilen und in einen vom Pumpengehäuse abgewandten Platinenraum zur Aufnahme der elektronischen Steuerung unterteilen.

Eine Vorspanneinrichtung, die bevorzugt in einem Stück mit dem Gehäuseboden des Gerätegehäuses ausgebildet ist, hat den Vorteil, dass sie zusammen mit dem elektronischen Steuergerät an das Pumpengehäuse montiert werden kann und somit keinen zusätzlichen Teile- bzw. Montagebedarf erfordert. Zudem kann dadurch die wirksame Axialkraft, mit welcher die Vorspanneinrichtung auf die Einlegedichtung drückt, konstruktiv in engen Toleranzgrenzen eingestellt und in der Großserie eingehalten werden.

Bevorzugt ist die Vorspanneinrichtung in Gestalt eines einseitig geschlossenen Hohlkörpers ausgebildet, dessen geschlossenes Ende sich im Inneren des elektronischen Steuergeräts befindet und in dessen offenes Ende ein motorfernes Ende der Motorwelle abschnittsweise hineinragt.

Diese Ausgestaltung gestattet es die im Pumpengehäuse gelagerte Motorwelle über das Pumpengehäuse hinaus bis in das Innere des elektronischen Steuergeräts hinein zu verlängern und am Ende der Motorwelle einen zur Erfassung des Drehwinkels der Motorwelle notwendigen Signalgeber anzuordnen. Der zugeordnete Signalempfänger lässt sich unmittelbar gegenüberliegend dazu direkt auf der Leiterplatte des elektronischen Steuergeräts platzieren, so dass separate Kontaktmittel zur elektrischen Kontaktierung dieses Signalempfängers mit der Leiterplatte eingespart werden.

In einer weiteren vorteilhaften Weiterbildung der Erfindung ist die Dichtungsaufnahme eine die Wellenbohrung umfangseitig umschließende, zur Umgebung des Pumpengehäuses hin außen offene Ausnehmung. Ein Grund dieser Ausnehmung bildet eine Schulter aus, an welcher die Einlegedichtung in axialer Richtung abgestützt ist. Durch die Befestigung des elektronischen Steuergeräts am Pumpengehäuse ist sichergestellt, dass die daran ausgebildete Vorspanneinrichtung mit der Dichtungsaufnahme des Pumpengehäuses fluchtet.

Als Einlegedichtung kann eine Dichtung aus elastischem Kunststoffmaterial oder aus einem elastischem Kunststoffverbundmaterial eingesetzt werden. Zusammen mit unterschiedlich gestalteten Dichtungsquerschnitten ermöglicht dies eine größtmögliche Freiheit bei der konstruktiven Abstimmung der Dichtungseigenschaften auf den jeweiligen Anwendungsfall.

Das vorgeschlagene Dichtungskonzept ist insbesondere geeignet für Hydraulikaggregate von Fahrzeugbremsanlagen, die mit einem elektronisch kommutierten Motor ausgestattet sind. Derartige Motoren bieten Vorteile hinsichtlich Lebensdauer, Dynamik und Baugröße, allerdings muss deren elektrische Ansteuerung in Abhängigkeit des Drehwinkels der Motorwelle bzw. des Rotors vorgenommen werden. Letzterer wird mittels eines Signalgebers auf der Motorwelle sowie eines damit zusammenwirkenden Signalempfängers im elektronischen Steuergerät erfasst.

Dieses elektronische Steuergerät ist durch die erfindungsgemäß ausgeführte Dichtungsvorrichtung gegenüber dem mit einem Druckmittel beaufschlagten Pumpengehäuse zuverlässig abgedichtet, ohne dass dabei die Signalübertragung zwischen dem Signalgeber und dem Signalempfänger beeinträchtigt wird.

Hinsichtlich eines potenziell möglichen Störungsfalls ist schließlich noch die durch die Erfindung geschaffene Möglichkeit zu einer zerstörungsfreien Zerlegung des Hydraulikaggregats in seine Komponenten sowie zu einem Austausch des elektronischen Steuergeräts oder des Pumpengehäuses von Bedeutung.

### Zeichnung

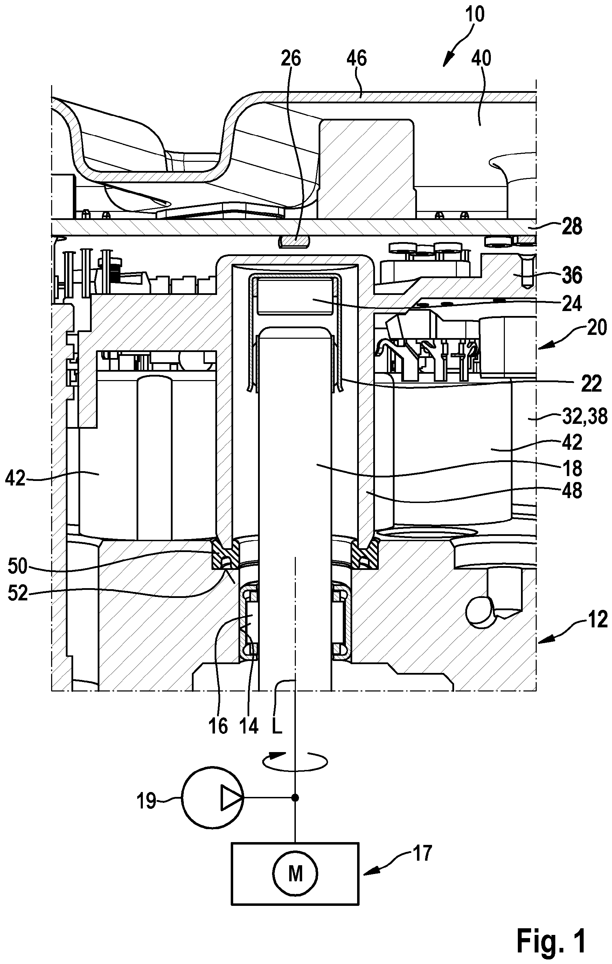

Die Erfindung ist in der Zeichnung dargestellt und wird in nachfolgender Beschreibung detailliert erläutert.

Diese Zeichnung umfasst eine einzige Figur, in welcher ein für die Erfindung wesentlicher Bereich eines Hydraulikaggregats im Längsschnitt gezeigt ist.

### Beschreibung

Der in der einzigen Figur dargestellte Bereich eines Hydraulikaggregats (10) umfasst u.a. einen Ausschnitt des Pumpengehäuses (12) in dem sich ein Abschnitt einer Wellenbohrung (14) befindet. In diesem Abschnitt der Wellenbohrung (14) ist ein Wälzlager (16) angeordnet, welches eine Motorwelle (18) drehbar im Inneren der Wellenbohrung (14) lagert. Weitere hierfür notwendige Lager sind aufgrund des begrenzten Ausschnitts in der Figur nicht zu erkennen. Lediglich schematisch in der Figur angedeutet ist ein Motor (17), durch welchen die Motorwelle (18) zu einer Rotationsbewegung antreibbar ist. Ebenfalls nur schematisch eingezeichnet ist ein von der rotierenden Motorwelle (18) betätigter Bremsdruckerzeuger (19), beispielsweise eine von einem auf der Motorwelle (18) angebrachten Exzenter getriebene Radialkolbenpumpe.

Die Motorwelle (18) ragt mit ihrem motorfernen Wellenende, über die Begrenzung des Pumpengehäuses (12) hinaus in das hohle Innere eines auf dieser Seite des Pumpengehäuses (12) angeordneten elektronischen Steuergeräts (20) hinein. Auf dem vorstehenden Ende der Motorwelle (18) ist ein einseitig geschlossenes, becherförmiges Halteelement (22) angebracht. Darin ist mit Abstand zu einer Stirnfläche der Motorwelle (18) ein Signalgeber (24) aufgenommen. Letzterer ist drehfest mit dem Haltelement (22) verbunden, bspw. mittels einer Klebeverbindung. Beim Signalgeber (24) handelt es sich um einen Magneten, dessen Magnetfeld von einem Signalempfänger (26) zum Zweck einer Erfassung des Drehwinkels der Motorwelle (18) auswertbar ist. Dieser Signalempfänger (26) ist hierfür, gegenüberliegend zum Signalgeber (24), auf einer Leiterplatte (28) des elektronischen Steuergeräts (20) angeordnet und mit einer darauf angebrachten elektrischen Schaltung kontaktiert.

Das mit dem Signalgeber (24) bestückte Halteelement (22) ist drehfest mit der Motorwelle (18) gekoppelt und folgt damit der Rotationsbewegung dieser Motorwelle (18).

Das elektronische Steuergerät (20) weist ein vorzugsweise aus Kunststoff bestehende Gerätegehäuse (32) auf. Dieses ist am Pumpengehäuse (12) festgelegt und umfasst eine, einen Innenraum des Gerätegehäuses (32) umschließende Umfangswand. Dieser Innenraum wird von einem quer zur Umfangswand verlaufenden Zwischenboden (36) in einen dem Pumpengehäuse (12) zugewandten Spulenraum (38) und in einen davon abgewandt liegenden, die Leiterplatte (28) der Steuerelektronik aufnehmenden, Elektronikraum (40) unterteilt. In bevorzugter Ausführungsform bildet der Zwischenboden (36) ein Rahmenbauteil, das mit Durchbrüchen versehen ist, welche die beiden Räume miteinander verbinden.

Im Spulenraum (38) des Gerätegehäuses (32) sind Spulenbaugruppen (42) von Magnetventilen zur Druckmittelsteuerung untergebracht. Diese Spulenbaugruppen (42) bestehen aus einer unter einer Ventilkappe angeordneten Magnetspule. Der druckmittelsteuernde Teil der Hydraulikventile ist nicht erkennbar in zugeordneten Ausnehmungen am Pumpengehäuse (12) verankert und ragt mit jeweils einem über die Begrenzung des Pumpengehäuses (12) vorstehenden Ventildom in das Innere dieser Magnetspulen hinein. Im Ventildom ist ein vom magnetischen Feld der Spulen betätigbares Ventilglied untergebracht (nicht dargestellt). Am Zwischenboden (28) sind elektrische Kontaktelemente angebracht, über welche die elektrische Kontaktierung der Spulenbaugruppen (42) mit der Leiterplatte (28) des elektronischen Steuergeräts (20) erfolgt.

Diese Leiterplatte (28) ist im Elektronikraum (40) des elektronischen Steuergeräts (20) bevorzugt mit Abstand planparallel zum Zwischenboden (36) ausgerichtet und mit elektronischen Bauelementen bestückt. Auf der Leiterplatte (28) vorhandene Leiterbahnen verbinden die Bauelemente zu einer elektrischen Schaltung, durch welche eine an den Bedarf angepassten Regelung eines Bremsdrucks möglich ist.

Der Elektronikraum (40) ist auf seiner vom Pumpengehäuse (12) abgewandten Seite zur Umgebung hin offen und wird dort von einem Gehäusedeckel (46) verschlossen. Von diesem Gehäusedeckel (46) wird das Innere des elektronischen Steuergeräts (20) vor Verunreinigungen bzw. eindringender Feuchtigkeit aus der Umgebung des Hydraulikaggregats (10) geschützt. Er besteht beim Ausführungsbeispiel aus Metall und ist beispielhaft 3-dimensionial geformt.

Bevorzugt einteilig mit dem Zwischenboden (36) ausgebildet ist eine Vorspanneinrichtung (48) in Gestalt eines einseitig verschlossenen Bechers bzw. Hohlkörpers. Dessen geschlossenes Ende befindet sich im Elektronikraum (40) des Gerätegehäuses (32), in sein offenes Ende ragt die Motorwelle (18) mit dem angebauten Haltelement (22) und dem darin aufgenommenen Signalgeber (24) abschnittsweise hinein. Die Vorspanneinrichtung (48) steht senkrecht und damit in Richtung einer Längsachse L der Motorwelle (18) vom Zwischenboden (36) ab und durchdringt im angebauten Zustand des Steuergeräts (20) den Spulenraum (38). Mit der Stirnfläche eines gegenüber dem Spulenraum (38) vorstehenden Abschnitts drückt die Vorspanneinrichtung (48) im Bereich ihres offenen Endes auf eine Einlegedichtung (50), welche in einer gestuft ausgeführten Dichtungsaufnahme (52) des Pumpengehäuses (12) angeordnet ist. Diese Dichtungsaufnahme (52) umschließt die Wellenbohrung (14) und ist beim Ausführungsbeispiel zur Umgebung des Pumpengehäuses sowie zur Wellenbohrung (14) hin offen. Darüber hinaus bildet ein Grund der Dichtungsaufnahme (52) eine Schulter aus, auf welcher die Einlegedichtung (50) axial aufliegt.

Die erwähnte Einlegedichtung (50) an sich ist ringförmig gestaltet und kann aus einem elastischen Kunststoffverbundmaterial oder einem elastischen Kunststoff hergestellt sein, beispielsweise aus EPDM oder Silikonschaum. Sie kann je nach Anwendungsfall im Querschnitt massiv oder hohl ausgeführt werden und eine kreisrunde, ovale, mehreckige oder bspw. z-förmige Kontur haben. Beim dargestellten Ausführungsbeispiel ist die Einlegedichtung (50) beispielhaft massiv ausgeführt und hat ein Doppel-T-Profil.

Die axiale Erstreckung und die radiale Ausdehnung der Vorspanneinrichtung (48) ist konstruktiv derart auf die Abmessungen des Pumpengehäuses (12) und des Gerätegehäuses (32) abgestimmt, dass die Stirnfläche der Vorspanneinrichtung (48) die Einlegedichtung (50) mit einer vorbestimmten Axialkraft beaufschlagt, wenn das Steuergerät (20) an das Pumpengehäuse (12) angebaut ist.

Von dieser Axialkraft wird die Einlegedichtung (50) elastisch derart verformt, dass Letztere sich zuverlässig an die Begrenzungen der Dichtungsaufnahme (52) am Pumpengehäuse (12) anlegt. Die Einlegedichtung (50) verhindert damit zusammen mit der Vorspanneinrichtung (48), dass eine Druckmittelleckage aus dem Pumpengehäuse (12) über die Wellenbohrung (14) in das Innere des Steuergeräts (20) vordringen und dort Störungen verursachen kann.

Es ist an dieser Stelle anzumerken, dass die Einlegedichtung (50) getrennt vom elektronischen Steuergerät (20) in der Dichtungsaufnahme (52) angeordnet werden kann bevor dieses elektronische Steuergerät (20) an das Pumpengehäuse (12) montiert wird oder dass die Einlegedichtung (50) zunächst an der Vorspanneinrichtung (48) des elektronischen Steuergeräts (12) vormontiert und anschließend zusammen mit dem elektronischen Steuergerät (20) an das Pumpengehäuse (12) montiert wird. Beide Varianten sind alternativ vorstellbar.

## Patentansprüche

1. Hydraulikaggregat (10), insbesondere zur Steuerung und Regelung eines Bremsdrucks in einem Bremskreis einer elektronisch schlupfregelbaren Bremsanlage eines Kraftfahrzeugs,
mit einem Pumpengehäuse (12), das mit einem betätigbaren Bremsdruckerzeuger (19) bestückt ist,
mit einem Motor (17) zum Antrieb des Bremsdruckerzeugers (19) und
mit einem elektronischen Steuergerät (20) zu einer bedarfsgerechten elektrischen Ansteuerung des Motors (17),
wobei der Motor (17) und das Steuergerät (20) auf einander gegenüberliegenden Seiten des Pumpengehäuses (12) angeordnet sind, wobei am Pumpengehäuse (12) eine Wellenbohrung (14) ausgebildet ist, die von einer ersten Seite des Pumpengehäuses (12) an welcher der Motor (17) angeordnet ist zu einer zweiten Seite des Pumpengehäuses (12) an welcher das elektronische Steuergerät (20) befestigt ist durchgeht,
wobei im Inneren der Wellenbohrung (14) eine vom Motor (17) zu einer Rotationsbewegung antreibbare Motorwelle (18) drehbar angeordnet ist und wobei zu einer Abdichtung der Wellenbohrung (14) gegenüber einem Innenraum des elektronischen Steuergeräts (20) eine Dichtungsvorrichtung vorgesehen ist, **dadurch gekennzeichnet,**
**dass** die Dichtungsvorrichtung eine in einer Dichtungsaufnahme (52) des Pumpengehäuses (12) angeordnete Einlegedichtung (50) umfasst, welche von einer Vorspanneinrichtung (48) mit einer mechanischen Vorspannkraft beaufschlagt ist, wenn das elektronische Steuergerät (20) am Pumpengehäuse (12) fest verankert ist.

2. Hydraulikaggregat nach Anspruch 1, **dadurch gekennzeichnet,**
**dass** die Einlegedichtung (50) von der mechanischen Vorspanneinrichtung (48) mit einer in Richtung einer Längsachse L der Motorwelle (18) wirkenden Axialkraft beaufschlagt ist.

3. Hydraulikaggregat nach Anspruch 1 oder 2, **dadurch gekennzeichnet, dass** ein Gerätegehäuse (32) des Steuergeräts (20) einen Zwischenboden (36) umfasst von dem die Vorspanneinrichtung (48), vorzugsweise in Richtung einer Längsachse L der Motorwelle (18), absteht.

4. Hydraulikaggregat nach Anspruch 3, **dadurch gekennzeichnet,**
**dass** die Vorspanneinrichtung (48) in einem Stück mit dem Zwischenboden (36) des Gerätegehäuses (32) ausgebildet ist.

5. Hydraulikaggregat nach einem der Ansprüche 1 bis 4,
**dadurch gekennzeichnet,**
**dass** die Vorspanneinrichtung (48) in Gestalt eines einseitig geschlossenen Hohlkörpers ausgebildet ist, dessen geschlossenes Ende sich im Inneren des elektronischen Steuergeräts (20) befindet und in dessen offenes Ende ein motorfernes Ende der Motorwelle (18) abschnittsweise hineinragt.

6. Hydraulikaggregat nach einem der Ansprüche 1 bis 5,
**dadurch gekennzeichnet,**
**dass** die Vorspanneinrichtung (48) mit einer Stirnfläche ihres offenen Endes auf die Einlegedichtung (50) drückt.

7. Hydraulikaggregat nach einem der Ansprüche 1 bis 6,
**dadurch gekennzeichnet,**
**dass** die Einlegedichtung (50) aus einem formelastischem Kunststoffmaterial oder aus einem formelastischen Kunststoffverbundmaterial besteht.

8. Hydraulikaggregat nach einem der Ansprüche 1 bis 7,
**dadurch gekennzeichnet,**
**dass** die Einlegedichtung (50) mit einem massiven Querschnitt oder mit einem Hohlquerschnitt ausgeführt ist und eine kreisrunde, ovale, mehreckige oder eine z-förmige Außenkontur aufweist.

9. Hydraulikaggregat nach einem der Ansprüche 1 bis 8,
**dadurch gekennzeichnet,**
**dass** die Dichtungsaufnahme (52) eine die Wellenbohrung (14) umfangseitig umschließende, zur Umgebung des Pumpengehäuses (12) hin offene Ausnehmung ist, welche eine Schulter aufweist, an welcher die Einlegedichtung (50) in Richtung einer Längsachse L der Motorwelle (18) abgestützt ist.

10. Hydraulikaggregat nach Anspruch 9, **dadurch gekennzeichnet,**
**dass** die Dichtungsaufnahme (52) zur Wellenbohrung (14) hin offen ist.

11. Hydraulikaggregat nach Anspruch 9 oder 10, **dadurch gekennzeichnet, dass** die Einlegedichtung (50) im vorgespannten Zustand an einer Begrenzung der Dichtungsaufnahme (52) mit radialer und/oder mit axialer Vorspannung anliegt.

12. Hydraulikaggregat nach einem der Ansprüche 1 bis 11,
wobei zu einer Erfassung und elektronischen Auswertung des Drehwinkels der Motorwelle (18) durch das elektronische Steuergerät (20) ein mit der Motorwelle (18) rotierender Signalgeber (24) sowie ein zugeordneter ortsfest angeordneter Signalempfänger (26) vorgesehen sind,
**dadurch gekennzeichnet,**
**dass** der Signalempfänger (26) unmittelbar auf einer Leiterplatte (28) des elektronischen Steuergeräts (20) angeordnet und elektrisch kontaktiert ist.

13. Hydraulikaggregat nach einem der Ansprüche 1 bis 12,
**dadurch gekennzeichnet,**
**dass** der Motor (17) elektrisch kommutiert ist.

14. Verfahren zur Montage eines Hydraulikaggregats (10) nach den Merkmalen eines der Ansprüche 1 bis 13, **dadurch gekennzeichnet,**
**dass** die Einlegedichtung (50) in die am Pumpengehäuse (12) angeordnete Dichtungsaufnahme (52) eingelegt wird, bevor das elektronische Steuergerät (20) am Pumpengehäuse (12) verankert wird oder
**dass** die Einlegdichtung (50) an der Vorspanneinrichtung (48) des elektronischen Steuergeräts (12) vormontiert und anschließend zusammen mit dem elektronischen Steuergerät (20) an das Pumpengehäuse (12) montiert wird.

## Claims

1. Hydraulic assembly (10), in particular for the open-loop and closed-loop control of a brake pressure in a brake circuit of an electronically slip-controllable brake system of a motor vehicle, comprising a pump housing (12) which is fitted with an operable brake pressure generator (19),
comprising a motor (17) for driving the brake pressure generator (19) and comprising an electronic control device (20) for electrically actuating the motor (17) in line with demand,
wherein the motor (17) and the control device (20) are arranged on opposite sides of the pump housing (12), wherein a shaft bore (14) is formed on the pump housing (12) and passes from a first side of the pump housing (12), the motor (17) being arranged on the first side, to a second side of the pump housing (12), the electronic control device (20) being arranged on the second side,
wherein a motor shaft (18), which can be driven to rotate by the motor (17), is rotatably arranged in the interior of the shaft bore (14) and wherein a sealing apparatus is provided for sealing off the shaft bore (14) from an interior of the electronic control device (20), **characterized**
**in that** the sealing apparatus comprises an insert seal (50) which is arranged in a seal receptacle (52) of the pump housing (12) and has a mechanical preload force applied to it by a preloading device (48) when the electronic control device (20) is firmly anchored to the pump housing (12).

2. Hydraulic assembly according to Claim 1, **characterized**
**in that** the insert seal (50) has an axial force acting in the direction of a longitudinal axis L of the motor shaft (18) applied to it by the mechanical preloading device (48).

3. Hydraulic assembly according to Claim 1 or 2, **characterized**
**in that** a device housing (32) of the control device (20) comprises an intermediate base (36) from which the preloading device (48) projects, preferably in the direction of a longitudinal axis L of the motor shaft (18) .

4. Hydraulic assembly according to Claim 3, **characterized**
**in that** the preloading device (48) is formed in one piece with the intermediate base (36) of the device housing (32).

5. Hydraulic assembly according to any of Claims 1 to 4,
**characterized**
**in that** the preloading device (48) is designed in the form of a hollow body that is closed on one side, the closed end of the hollow body being located in the interior of the electronic control device (20) and an end of the motor shaft (18) that is remote from the motor projecting in part into the open end of the hollow body.

6. Hydraulic assembly according to any of Claims 1 to 5,
**characterized**
**in that** the preloading device (48), by way of a front face of its open end, presses onto the insert seal (50) .

7. Hydraulic assembly according to any of Claims 1 to 6,
**characterized**
**in that** the insert seal (50) consists of a dimensionally elastic plastics material or of a dimensionally elastic plastics composite material.

8. Hydraulic assembly according to any of Claims 1 to 7,
**characterized**
**in that** the insert seal (50) is embodied with a solid cross section or with a hollow cross section and has a circular, oval, polygonal or a z-shaped outer contour.

9. Hydraulic assembly according to any of Claims 1 to 8,
**characterized**
**in that** the seal receptacle (52) is a recess which surrounds the periphery of the shaft bore (14), is open towards the area surrounding the pump housing (12) and has a shoulder on which the insert seal (50) is supported in the direction of a longitudinal axis L of the motor shaft (18).

10. Hydraulic assembly according to Claim 9, **characterized**
**in that** the seal receptacle (52) is open towards the shaft bore (14).

11. Hydraulic assembly according to Claim 9 or 10, **characterized**
**in that** the insert seal (50) bears against a boundary of the seal receptacle (52) with radial and/or with axial preloading in the preloaded state.

12. Hydraulic assembly according to any of Claims 1 to 11,
wherein a signal transmitter (24), which rotates with the motor shaft (18), and an associated stationary signal receiver (26) are provided for detection and electronic evaluation of the rotation angle of the motor shaft (18) by the electronic control device (20), **characterized**
**in that** the signal receiver (26) is arranged and electrically contacted directly on a printed circuit board (28) of the electronic control device (20).

13. Hydraulic assembly according to any of Claims 1 to 12,
**characterized**
**in that** the motor (17) is electrically commutated.

14. Method for assembling a hydraulic assembly (10) according to the features of one of Claims 1 to 13, **characterized**
**in that** the insert seal (50) is inserted into the seal receptacle (52), which is arranged on the pump housing (12), before the electronic control device (20) is anchored on the pump housing (12), or
**in that** the insert seal (50) is premounted on the preloading device (48) of the electronic control device (12) and then mounted on the pump housing (12) together with the electronic control device (20).

## Revendications

1. Groupe hydraulique (10), notamment destiné à la commande et à la régulation d'une pression de freinage dans un circuit de freinage d'un système de freinage à régulation antipatinage électronique d'un véhicule automobile,
comprenant un corps de pompe (12) qui est équipé d'un générateur de pression de freinage (19) actionnable, comprenant un moteur (17) destiné à l'entraînement du générateur de pression de freinage (19) et comprenant un contrôleur (20) électronique destiné à une commande électrique du moteur (17) adaptée aux besoins,
le moteur (17) et le contrôleur (20) étant disposés sur des côtés mutuellement opposés du corps de pompe (12), un alésage d'arbre (14) étant formé sur le corps de pompe (12), lequel passe d'un premier côté du corps de pompe (12), au niveau duquel est disposé le moteur (17), à un deuxième côté du corps de pompe (12), au niveau duquel est fixé le contrôleur (20) électronique, un arbre de moteur (18) qui peut être entraîné par le moteur (17) en un mouvement de rotation étant disposé de manière rotative à l'intérieur de l'alésage d'arbre (14), et un dispositif d'étanchéité étant présent afin de réaliser l'étanchéité de l'alésage d'arbre (14) par rapport à un espace intérieur du contrôleur (20) électronique, **caractérisé en ce**
**que** le dispositif d'étanchéité comporte un insert d'étanchéité (50) disposé dans un logement de garniture d'étanchéité (52) du corps de pompe (12), lequel est soumis à une force de précontrainte mécanique par un dispositif de précontrainte (48) lorsque le contrôleur (20) électronique est fermement ancré au corps de pompe (12) .

2. Groupe hydraulique selon la revendication 1, **caractérisé en ce**
**que** l'insert d'étanchéité (50) est soumis, par le dispositif de précontrainte (48), à une force axiale qui agit dans la direction d'un axe longitudinal L de l'arbre de moteur (18).

3. Groupe hydraulique selon la revendication 1 ou 2, **caractérisé en ce**
**qu'**un boîtier d'appareil (32) du contrôleur (20) comporte un fond intermédiaire (36) duquel fait saillie le dispositif de précontrainte (48), de préférence dans la direction d'un axe longitudinal L de l'arbre de moteur (18).

4. Groupe hydraulique selon la revendication 3, **caractérisé en ce**
**que** le dispositif de précontrainte (48) est formé d'une seule pièce avec le fond intermédiaire (36) du boîtier d'appareil (32).

5. Groupe hydraulique selon l'une des revendications 1 à 4,
**caractérisé en ce**
**que** le dispositif de précontrainte (48) est réalisé sous la forme d'un corps creux fermé d'un côté, dont l'extrémité fermée se trouve à l'intérieur du contrôleur (20) électronique et dans l'extrémité ouverte duquel une extrémité de l'arbre de moteur (18) éloignée du moteur pénètre sur une certaine portion.

6. Groupe hydraulique selon l'une des revendications 1 à 5,
**caractérisé en ce**
**que** le dispositif de précontrainte (48) appuie avec une face frontale de son extrémité ouverte sur l'insert d'étanchéité (50).

7. Groupe hydraulique selon l'une des revendications 1 à 6,
**caractérisé en ce**
**que** l'insert d'étanchéité (50) est constitué d'une matière plastique à élasticité de forme ou d'un matériau composite plastique à élasticité de forme.

8. Groupe hydraulique selon l'une des revendications 1 à 7,
**caractérisé en ce**
**que** l'insert d'étanchéité (50) est réalisé avec une section transversale massive ou avec une section transversale creuse et présente un contour extérieur circulaire, ovale, polygonal ou en forme de Z.

9. Groupe hydraulique selon l'une des revendications 1 à 8,
**caractérisé en ce**
**que** le logement de garniture d'étanchéité (52) est un évidement qui entoure l'alésage d'arbre (14) du côté de sa périphérie, ouvert vers l'environnement du corps de pompe (12), et qui possède un épaulement sur lequel l'insert d'étanchéité (50) prend appui dans la direction d'un axe longitudinal L de l'arbre de moteur (18) .

10. Groupe hydraulique selon la revendication 9, **caractérisé en ce**
**que** le logement de garniture d'étanchéité (52) est ouvert vers l'alésage d'arbre (14).

11. Groupe hydraulique selon la revendication 9 ou 10, **caractérisé en ce**
**que** l'insert d'étanchéité (50), à l'état précontraint, repose contre une limite du logement de garniture d'étanchéité (52) avec une précontrainte radiale et/ou axiale.

12. Groupe hydraulique selon l'une des revendications 1 à 11,
un transmetteur de signaux (24) qui tourne avec l'arbre de moteur (18) ainsi qu'un récepteur de signaux (26) monté en position fixe étant présents pour une acquisition et une évaluation électronique de l'angle de rotation de l'arbre de moteur (18) par le contrôleur (20) électronique,
**caractérisé en ce**
**que** le récepteur de signaux (26) est disposé et mis en contact électrique directement sur une carte à circuit imprimé (28) du contrôleur (20) électronique.

13. Groupe hydraulique selon l'une des revendications 1 à 12,
**caractérisé en ce**
**que** le moteur (17) est commuté électriquement.

14. Procédé de montage d'un groupe hydraulique (10) selon les caractéristiques de l'une des revendications 1 à 13, **caractérisé en ce**
**que** l'insert d'étanchéité (50) est inséré dans le logement de garniture d'étanchéité (52) disposé sur le corps de pompe (12) avant que le contrôleur (20) électronique soit ancré au corps de pompe (12) ou
**que** l'insert d'étanchéité (50) est prémonté sur le dispositif de précontrainte (48) du contrôleur (12) électronique et est ensuite montée conjointement avec le contrôleur (20) électronique sur le corps de pompe (12) .
